# EUROPEAN PATENT APPLICATION

(11) **EP 4 446 469 A1**
(43) Date of publication of application: **16.10.2024**
(21) Application number: 23167534.9
(22) Date of filing: 12.04.2023
(51) Int. Cl.: C25B 1/04, C25B 9/05, C25B 9/60, C25B 9/65, C25B 9/67, C25B 9/70, C25B 15/00, C25B 15/08, F03D 9/19

(54) **ELECTROLYZER CARTRIDGE AND TRANSPORTATION THEREOF**

(71) Applicant: Siemens Gamesa Renewable Energy A/S, 7330 Brande (DK)
(72) Inventor: Soylu, Mahmut Erbil, 4700 Naestved (DK)
(74) Representative: SGRE-Association

(57) **Abstract**

The present invention relates to a compact electrolyzer cartridge (20) to be connected in connection to a wind turbine (1) to provide power to an electrolyzer (100), where the electrolyzer is positioned within a cartridge (20) inner volume (40) defined by a cartridge outer casing (30), and wherein the cartridge (20) may further be formed with transporting means (130) adapted for transporting the cartridges (20) on a surface.

The present invention further relates to the platform adapted for the cartridges.

The present invention further relates to the methods to exchange the cartridges.

## Description

### FIELD OF INVENTION

The present invention relates to electrolyzers, or more specifically electrolyzers adapted to be connected to wind turbines, such as grid connected wind turbines partly supplying power to the grid and partly to the electrolyzers, or off-grid wind turbines only connected for powering the electrolyzers.

### BACKGROUND

In current systems a plural of such electrolyzers in standard sized containers to be positioned at e.g. remote locations, such as in connection to off-shore wind turbines.

The wind turbines could be positioned onshore, but the present invention especially solves problems for offshore positioned wind turbines.

A problem with the container solution relates to changing containers, such as when positioned in at the sea, which is quite expensive, and frequent replacement will be required.

### SUMMARY OF THE INVENTION

The scope of the present invention is to overcome these problems.

This scope is met by the subject matter according to the independent claim. Advantageous embodiments of the present invention are described by the dependent claims.

According to the invention, this includes introducing a compact electrolyzer cartridge to be connected in connection to a wind turbine to provide power to an electrolyzer, where the electrolyzer is positioned within a cartridge inner volume defined by a cartridge outer casing, and wherein the cartridge may further be formed with transporting means adapted for transporting the cartridges on or over a surface.

The transporting means may be adapted for rolling cartridge on the surface, where the transporting means may be wheels.

The transporting means may be adapted to engage with means on or over the surface forming a path.

The cartridge further may be equipped with connection means adapted for the cartridge to be fixated to the surface.

The surface may be the surface of a platform connected to the wind turbine.

According to the invention, this further includes introducing a platform connected to a wind turbine and formed with paths adapted to guide a compact electrolyzer cartridge on the platform surface.

The paths may form a network of connected sub-paths and/or branches.

The paths may form a section where the cartridges are accessible for exchange.

The paths may form storing sections formed as sub-paths or branches adapted for storage of cartridges.

The sub-paths and/or branches may be connected by paths.

The means forming the path may be rail-like features.

The paths forming the path may be as an overhead crane or hoist system.

The platform may be adapted to store and transport compact electrolyzer cartridges according to any the previous embodiments.

According to the invention, this includes introducing a method to position or remove a compact electrolyzer cartridge from a platform connected to a wind turbine and where the platform surface comprising paths and sub-paths and/or branches at the surface, the method for the positioning including;
- a step to position the cartridge on the platform surface such that transport means of the cartridge engage a path section where the cartridges are accessible for exchange,
- a step of transporting the cartridge along a path at the platform,
- a step of positioning the cartridge at an empty branch of the paths adapted for storage of cartridges,
- a step of fixating the cartridge to the surface at this position, and

The method for the removal of the cartridge includes;
- a step of releasing the cartridge from the branch of the paths adapted for storage of cartridges,
- a step of transporting the cartridge along a path at the platform,
- a step of positioning the cartridge at the section of the path where the cartridges are accessible for exchange,
- a step of removing the cartridge from the platform.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a schematic presentation of a wind turbine including a platform and containers positioned on the platform
- Figure 2: shows a front cross section view of a cartridge according to the present invention
- Figure 3: shows a platform at a wind turbine with a plural of cartridges and paths to transport the cartridges at the platform.
- Figure 4: shows an embodiment where the paths are formed as overhead cranes or hoists adapted to carry the cartridges over the platform.
- Figure 5: shows a flow chart illustrating the method to position cartridges at the platform surface.
- Figure 6: shows a flow chart illustrating the method to remove cartridges from the platform surface.

### DETAILED DESCRIPTION

The illustrations in the drawings are schematic. It is noted that in different figures, similar or identical elements are provided with the same reference signs.

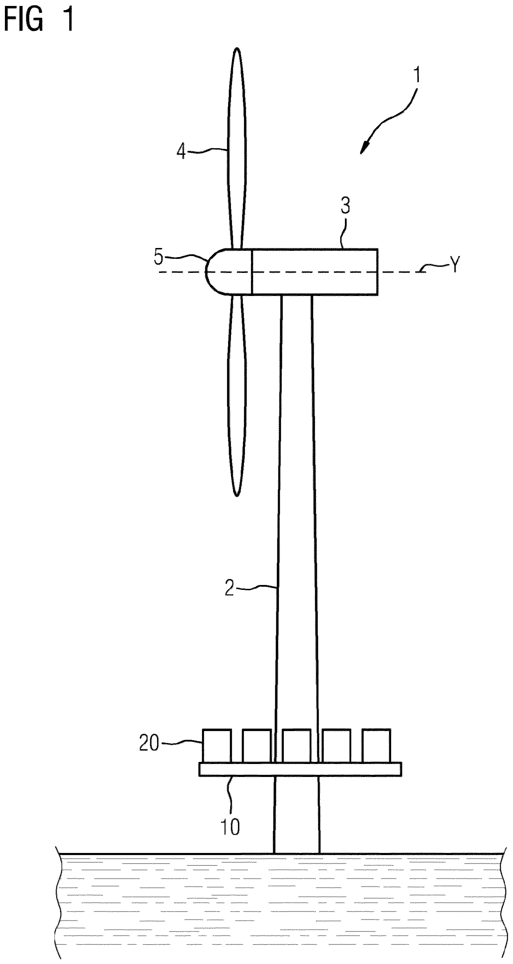

**Figure 1** shows an embodiment wind turbine 1 positioned in the water, such as the ocean. The wind turbine 1 comprises a tower 2 mounted on a non-depicted fundament. A nacelle 3 is arranged on top of the tower 2. The wind turbine 1 further comprises a wind rotor 5 having two, three or more blades 4 (in the perspective of Figure 1 only two blades 4 are visible).

The wind rotor 5 is rotatable around a longitudinal rotation axis Y. The wind turbine 1 comprises an electric generator.

In the illustrated embodiment a platform 10 is positioned at the tower 2. The position of the platform 10 at the tower 2 could be such that it is generally above water despite waves and tides.

The platform 10 is adapted for cartridges 20 to be positioned and optionally fixed on its surface. In a non-exclusive manner the cartridges 20 could comprise operational parts such as hydrogen production plant, but could be other systems e.g., CO2 extraction machines. In the following the cartridges 20 are exampled as comprising hydrogen producing plants.

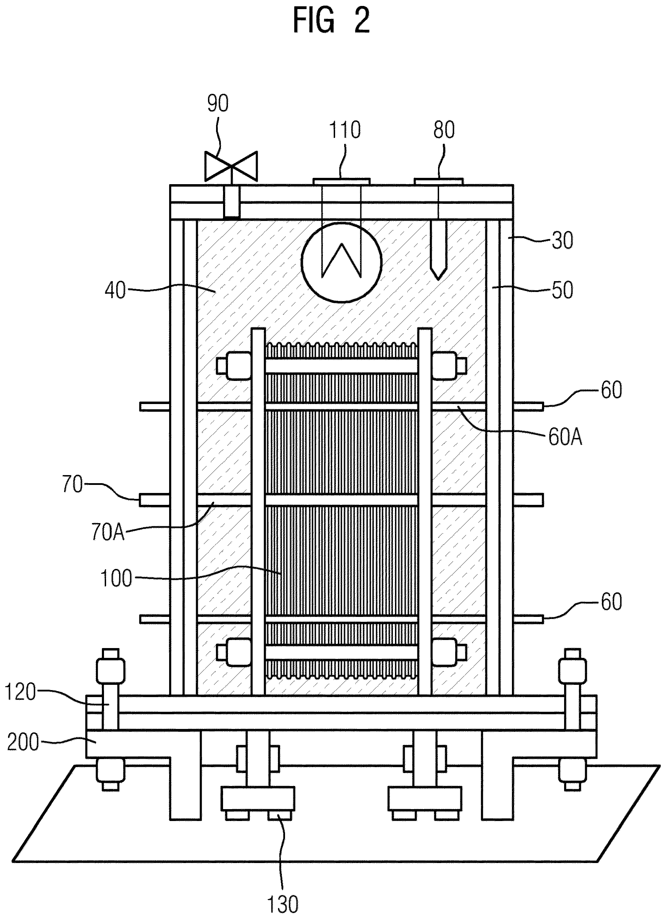

**Figure 2** illustrates a front view of an embodiment cartridge 20 revealing inside parts.

The cartridge 20 comprises a cartridge casing 30 which at the inner surface facing the cartridge 20 inner volume 40 may be formed with an insulation 50.

The casing 30 (and optional insulation 50) may comprise openings 60 for inlet and outlet substances for the electrolyzer 100, such as gasses, liquids or mixes thereof. Conduits 60A in the inner volume 40 connects the electrolyzer 100 with the openings 60 for the transportation of the inlet and outlet substances.

The casing 30 (and optional insulation 50) may comprise openings 70 for electrical connection to the electrolyzer 100, and wherein conductors 70A in the inner volume 40 connects the electrolyzer 100 with the openings 70 for providing current to the electrolyzer 100.

The example shows an electrolyzer 100 positioned within the inner volume 40 and could be formed as by a stack of electrolyzer parts including e.g., stacks of anodes and cathodes, where the anodes and cathodes are separated by membranes.

In one embodiment the inner volume 40 within the cartridge 20 and outside the electrolyzer 100 is filled with a substance, such as a gel or fluid like Bingham plastic fluid, which is a viscoplastic material that behaves as a rigid body at low stresses but flows as a viscous fluid at high stress. At times of stand-still, the gel forces in the fluid will be high, so in the event of a sudden failure of the electrolyzer, the fluid covering the electrolyzer will act like a solid during the initial impact, thus lowering the impact on the pressure chamber.

In an embodiment the conduits 60A and/or conductors 70A are positioned within the substance inside the inner volume 40.

The electrolyzer solution may be stored within the inner volume 40. This will in case of an electrolyzer failure assist in preventing an explosion.

A pressure sensor 80 may be positioned within the compact cartridge 20 monitoring the pressure within.

Further, to adjust the pressure within the cartridge 20, and more especially in case of a registered overpressure, an attached relief valve 90 may be connected to reduce the pressure.

The cartridge 20 is small and compact compared to traditional containers each comprising a plural of electrolyzers 100. Each cartridge 20 may only comprise one electrolyzer 100 (where each electrolyzer 100 could be composed as an electrolyzer stack). In case of e.g., a damaged or failing electrolyzer 100, only the relatively easy handable respective cartridges 20 need to be exchanged, just as only the one malfunctioning cartridge 20 needs to be exchanged, the rest can remain in operation.

This for example enables smaller cranes for replacing the cartridges 20 compared to the traditional containers, and for cartridges 20 positioned in relation to e.g., offshore wind turbines, smaller ships for the replacement would also be made possible.

The cartridge 20 solution further enables easy upgrading to newer, or just different, electrolyzer 100 designs. Rather than needing to redesign the inner piping and arrangements of the electrolyzers 100 within a container, the cartridge casing 30 simply being adapted to fit the respective electrolyzer 100. In one embodiment the connections are positioned at standardized positions, such as the openings 60, 70 for respectively the gas, liquid or mix thereof inlet and outlet, and the electrical connection. This enables easy replacement without the need of on-site adaptations.

To regulate the temperature within the cartridge 20, it may be formed with a heater 110, such as an electric heater. During windy periods the electric heater 110 can be powered by the wind turbine.

In one embodiment the electric heater 110 provides heat to the electrolyzer 100 via the substance in the inner volume 40.

However, in the periods of no wind, with no grid connection and/or in the cold weather periods, thermal management is a problem. It is expensive to isolate and/or heat large containers during periods of no wind durations, and thus a substantially large backup power generation / storage system is required.

Due the smaller mass and volume of the cartridges 20 compared to multi-electrolyzer 100 containers, and the exclusion of the container itself, the required power for thermal management is decreased. Further thermal improvement is enabled by the inner insulation 50 reducing the thermal flux through the cartridge 20 and minimize the heat loss. In one embodiment, the media filled into the inner volume 40, such as Bingham plastic fluid, may be selected or optimized for increased thermal insulation, such as by additives etc. These features alone and in combination has the advantage of reducing need of power supply during these periods, with the advantage smaller backup power generation / storage system may be implemented.

When starting traditional multi-electrolyzer 100 container systems, it takes a significant time bringing the hydrogen up to the spec, pressurizing the system, purging with nitrogen on the hydrogen side and ventilating with air on the oxygen side. This is due to the combined piping inside the container forming a relatively large volume, requiring a large purge volume and larger nitrogen system. In the present cartridge 20 design, balance of stack volumes can be minimized and the preparation time of the electrolyzer 100 within for operation will be reduced.

The cartridge 20 may further be equipped connection means 120 of any kind allowing it to be fixated e.g., to the platform 10 surface, such as to platform connection means 200. In the illustrated embodiment the connection means 120 are formed as flanges protruding from the bottom surface formed with openings formed openings in platform connection means 200 reaching from the platform 10. The cartridge 20 then will be positioned with the openings matching and fixed to the platform 10 e.g., by a bolt or screw positioned in the openings. Alternative fixation means would also apply as it would be apparent to the skilled person, like clamp-connection etc.

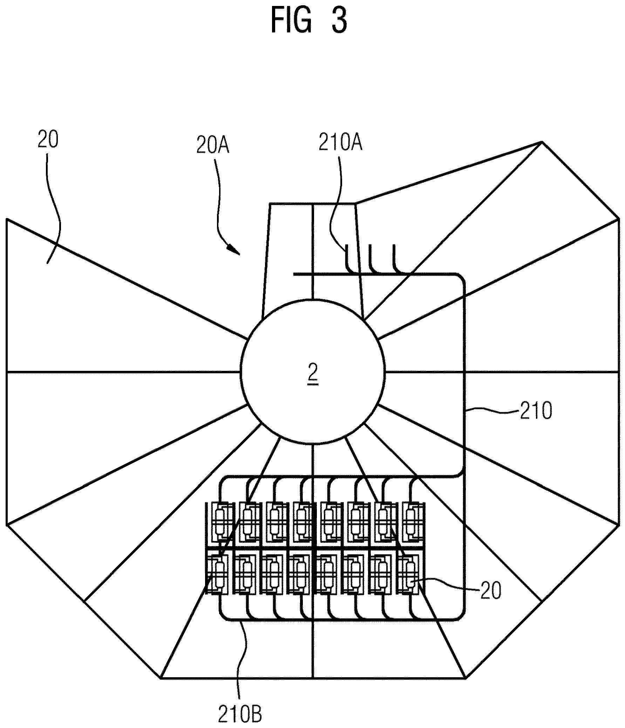

The cartridge 20 may further be formed with transporting means 130 such as rollers of any kind, caterpillars etc. In an embodiment as illustrated in figure 3, the platform 10 then are formed with a network of paths 210 adapted to allow a guided and safe transport of the cartridges 20 in the platform 10 surface.

In the present embodiment example, the transporting means 130 are wheels adapted to roll on the paths 220 formed as rail positioned on the platform 10 surface. Other embodiments would however also apply, e.g. the paths 210 being deepening's in the platform 10 surface or defined by other border means adapted to guide the cartridges 20, the transporting means 130 possible being wheels.

As illustrated in **figure 3****,** the paths 210 forms a network of connected sub-paths 210A, 210B, or branches.

These sub-paths could form a section 210A where the cartridges 20 will be accessible for exchange. This exchange section 210A could e.g. be positioned at a part of the platform 10 where it is shaped 10A in a manner allowing ships to come in position and access the cartridge 20 positioned in the exchange section 210A, e.g. by a crane. Alternatively, a crane or other means to tower or move the cartridges 20 between the ship a platform could be positioned on the platform 10.

The sub-paths further form storing sections 210B forming branches where the individual cartridges 20 may be stored during operation and fixated as previously described.

The individual sub-paths 210A, 210B will be connected by paths 210.

This enables easy, stable, and safe handling of the cartridges 20, both under exchange and under operation. The compactness of the cartridges 20 ensuring easy handling, and the possibility to store them on the platform 10 in a compact manner.

As for the connections by the openings 60, 70, the connection means 120 and transportation means 130 may be standardized in the manner they could be fit to any cartridge 20 for any suitable electrolyzer 100.

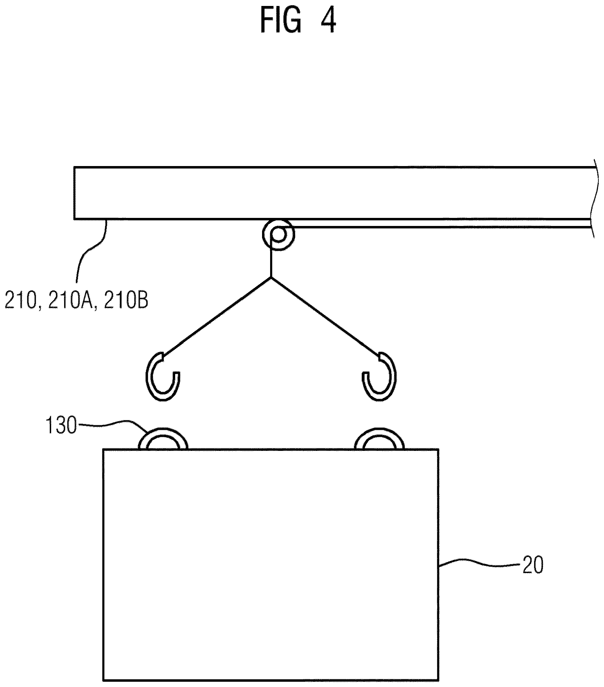

**Fig. 4** illustrates another embodiment where the paths 210 and individual sub-paths 210A, 210B are formed as an overhead crane or hoist system and the transporting means 130 are any means as known in the art adapted for the crane to connect to the cartridge 20 to lift it above the platform 10 surface.

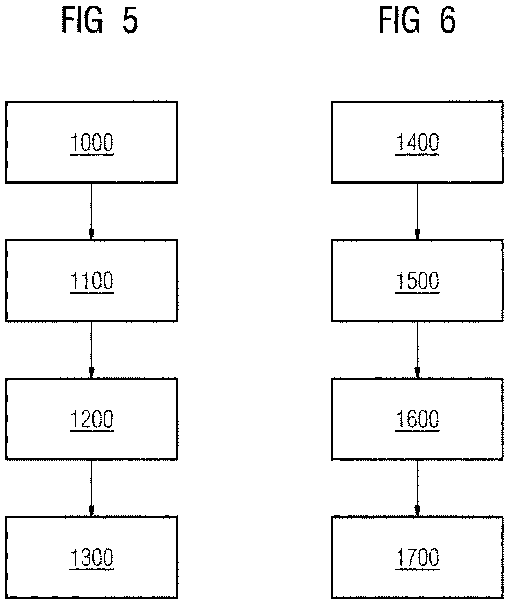

**Fig. 5** illustrates the method to position or remove a compact electrolyzer cartridge 20 from a platform 10) connected to a wind turbine (1) and where the platform (10) surface comprising paths (210) and sub-paths and/or branches (210A, 210B) at the surface, the method for the positioning including;
- a step (1000) to position the cartridge (20) on the platform (10) surface such that transport means (130) of the cartridge (20) engage a path (210) section (210A) where the cartridges (20) are accessible for exchange,
- a step (1100) of transporting the cartridge (20) along a path (210) at or over the platform (20),
- a step (1200) of positioning the cartridge (20) at an empty branch (210B) of the paths (210) adapted for storage of cartridges (20),
- a step (1300) of fixating the cartridge (20) to the surface at this position.

**Fig. 6** illustrates the method to remove or remove a compact electrolyzer cartridge (20) from a platform (10) connected to a wind turbine (1) and where the platform (10) surface comprises paths (210) and sub-paths and/or branches (210A, 210B) at the surface, the method including;
- a step (1400) of releasing the cartridge (20) from the branch (210B) of the paths (210) adapted for storage of cartridges (20),
- a step (1500) of transporting the cartridge (20) along a path (210) at or over the platform (20),
- a step (1600) of positioning the cartridge (20) at the section (210A) of the path (210a) where the cartridges (20) are accessible for exchange,
- a step (1700) of removing the cartridge (20) from the platform (10).

## Claims

1. A compact electrolyzer cartridge (20) to be connected in connection to a wind turbine (1) to provide power to an electrolyzer (100), where the electrolyzer is positioned within a cartridge (20) inner volume (40) defined by a cartridge outer casing (30), and wherein the cartridge (20) may further be formed with transporting means (130) adapted for transporting the cartridges (20) on or over a surface.

2. A compact electrolyzer cartridge (20) according to claim 1, wherein the transporting means (130) are adapted for rolling cartridge (20) on the surface.

3. A compact electrolyzer cartridge (20) according to claim 1 or 2, wherein the transporting means (130) are wheels.

4. A compact electrolyzer cartridge (20) according to claim 1, 2 or 3, wherein the transporting means (130) are adapted to engage with means on or above the surface forming a path (210, 210A, 210B).

5. A compact electrolyzer cartridge (20) according to any of the previous claims, wherein the cartridge (20) further is equipped with connection means (120) adapted for the cartridge (20) to be fixated to the surface.

6. A compact electrolyzer cartridge (20) according to any of the previous claims, wherein the surface is the surface of a platform (10) connected to the wind turbine (1).

7. A platform (10) connected to a wind turbine (1) and formed with paths (210, 210A, 210B) adapted to guide a compact electrolyzer cartridge (20) on the platform (10) surface.

8. A platform (10) according to claim 7, where the paths (210) form a network of connected sub-paths and/or branches 210A, 210B.

9. A platform (10) according to claim 8, where the paths (210) form a section (210A) where the cartridges 20 is accessible for exchange.

10. A platform (10) according to claim 8 or 9, where the paths (210) form storing sections (210B) forming branches adapted for storage of cartridges (20).

11. A platform (10) according to claim 9 and 10, where the sub-paths and/or branches (210A, 210B) are connected by paths 210.

12. A platform (10) according to any of the claims 7-11, wherein the means forming the path (210, 210A, 210B) are rail-like features.

13. A platform (10) according to claim 1, or any of claims 4-11, wherein the paths (210, 210A, 210B) are formed as an overhead crane or hoist system.

14. A platform (10) according to any of the claims 7-12, adapted to store and transport compact electrolyzer cartridges (20) according to any of the claims 1-6.

15. Method to position or remove a compact electrolyzer cartridge (20) from a platform (10) connected to a wind turbine (1) and where the platform (10) surface comprising paths (210) and sub-paths and/or branches (210A, 210B) at the surface, the method for the positioning including;
- a step (1000) to position the cartridge (20) on the platform (10) surface such that transport means (130) of the cartridge (20) engage a path (210) section (210A) where the cartridges (20) are accessible for exchange,
- a step (1100) of transporting the cartridge (20) along a path (210) at the platform (20),
- a step (1200) of positioning the cartridge (20) at an empty branch (210B) of the paths (210) adapted for storage of cartridges (20),
- a step (1300) of fixating the cartridge (20) to the surface at this position, and
The method for the removal of the cartridge (20) includes;
- a step (1400) of releasing the cartridge (20) from the branch (210B) of the paths (210) adapted for storage of cartridges (20),
- a step (1500) of transporting the cartridge (20) along a path (210) at the platform (20),
- a step (1600) of positioning the cartridge (20) at the section (210A) of the path (210a) where the cartridges (20) are accessible for exchange,
- a step (1700) of removing the cartridge (20) from the platform (10).
